# FASCICULE DE BREVET EUROPEEN

(11) **EP 2 078 739 B1**
(45) Date de publication et mention de la délivrance du brevet: **26.02.2014**
(21) Numéro de dépôt: 09005091.5
(22) Date de dépôt: 29.10.2003
(51) Int. Cl.: C09D 183/06, B29C 33/64, C08K 5/06

(54) **Moule pour une pièce en matériau composite enduit d'un produit de démoulage**
Gussform für ein Verbundwerkstoffteil, die mit einem Formtrennmittel bestrichen ist
Mould for a part made from composite material coated with a demoulding product

(30) Priorité: 30.10.2002 FR 0213588
(43) Date de publication de la demande: 15.07.2009
(62) Demande divisionnaire de: 03782512.2
(73) Titulaire: EUROCOPTER, 13725 Marignane Cédex (FR)
(72) Inventeur: BOSCHET, Patrick, 78180 Montigny Le Bretonneux (FR); PIEL, Emmanuel, 76620 Le Havre (FR)
(74) Mandataire: GPI & Associés

(56) Documents cités:
- EP-A- 0 473 995
- EP-A- 0 476 925
- EP-A- 0 599 615
- EP-A- 1 215 254
- WO-A-00/77083
- WO-A-01/21374
- WO-A-02/06030
- CH-A- 534 732
- US-A- 5 650 453
- US-B1- 6 313 255

## Description

La présente invention concerne un moule pour une pièce en matériau composite enduit d'un produit de démoulage. Bien que non exclusivement, la présente invention s'applique particulièrement aux pales d'hélicoptère ou aux éléments de pales d'hélicoptère, qui sont fabriqués de façon usuelle par moulage d'un matériau composite.

On sait que, pour faciliter le démoulage de telles pales ou de tels éléments de pales après polymérisation, on applique préalablement un produit de démoulage sur toute la surface du moule.

Les produits de démoulage connus contiennent une grande proportion de solvant et présentent de ce fait de nombreux inconvénients, tels que l'importance des quantités devant être utilisées et le rejet de composés organiques volatils dans l'environnement.

Citons le document EP1215254 décrit une composition silicone liquide sans solvant durcissable par irradiation avec des rayonnements actiniques tels que les rayonnements UV, les rayons X ou les faisceaux d'électrons, afin de former un film de revêtement durcissable sur des matériaux substrats. Les compositions sont utiles pour recouvrir différents substrats qui ont pour fonction d'être ultérieurement enlevés (étiquettes, feuille papier, feuille plastique) mais ne vise pas un produit de démoulage. La composition d'organopolysiloxane durcissable par rayonnement comprend 100 parties en masse d'un composé aromatique (X-Z)nZ où X représente un groupe organopolysiloxanyle et 0,3 à 5 parties en poids d'un sel de diaryliodinium en tant qu'initiateur de photopolymérisation.

La présente invention a pour objet de remédier à ces inconvénients. Elle concerne un moule enduit d'un produit de démoulage anti-adhérent sans solvant, particulièrement efficace.

A cette fin, l'invention, un moule pour une pièce en matériau composite est enduit d'un produit liquide de démoulage sans solvant, qui polymérise par voie thermique ; le produit comportant :
- 100 parts pondérales d'un constituant de base consistant en un polydiméthylsiloxane époxyde,
- entre 5 et 7 parts pondérales d'un agent de polymérisation dudit constituant de base, constitué d'un sel de diaryliodonium,
- entre 5 et 10 parts pondérales d'un modulateur d'anti-adhérence, constitué d'un polydiméthylsiloxane époxydé; et
- un agent anti-collage rendant le produit moins gluant avant polymérisation, qui est constitué de 8 à 12 parts pondérales de mono-vinyléther de dodécyle et de 8 à 12 parts pondérales d'un cyclohexane diméthanoldivinyléther.

Comme constituant de base et comme modulateur d'adhérence, on peut respectivement utiliser les produits fabriqués par la société RHODIA en portant respectivement les dénominations commerciales « UV POLY 200 » et « UV RCA 200 ».De même, l'agent de polymérisation à base de sel de diaryliodonium peut être celui fabriqué et vendu sous le nom commercial de « UV CATA 21 1 » par cette société RHODIA.

Ledit agent anti-collage (qui permet entre autre au produit de démoulage de pouvoir être étalé aisément sur les parois du moule et de réduire significativement l'aspect collant laissé par le polydiméthylsiloxane époxydé lorsqu'il n'est pas polymérisé) peut être constitué par un mélange d'un mono-vinyléther et d'un divinyléther.

Selon un mode de réalisation privilégié, le mono vinyléther est celui de dodécyle [formule CH₃-(CH₂)₁₁-O-CH=CH₂], tandis que le di-vinyléther est le 1.4 cyclohexane diméthanoldivinyléther [formule CH₂= CH-O-C₆H₁₀-O-CH=CH₂].

Avantageusement, ledit produit de démoulage adapté au moule comporte :
- entre 5 et 7 parts pondérales de l'agent de polymérisation,
- entre 5 et 10 parts pondérales du modulateur d'anti-adhérence, ce modulateur d'anti-adhérence étant un polydiméthylsiloxane époxydé, et
- l'agent anti-collage étant présent à hauteur de 8 à 12 parts pondérales d'un mono-vinyléther de dodécyle et de 8 à 12 parts pondérales d'un cyclohexane diméthanoldivinyléther.

Encore plus avantageusement, ce produit de démoulage comporte :
- 6 parts pondérales de l'agent de polymérisation,
- 8 parts pondérales du modulateur d'anti-adhérence, et
- l'agent anti-collage étant présent à hauteur de 11,4 parts pondérales d'un mono-vinyléther de dodécyle et de 11,4 parts pondérales d'un cyclohexane diméthanoldivinyléther.

Ainsi, grâce à l'invention, on obtient un produit de démoulage sans solvant qui présente de très bonnes propriétés d'anti-adhérence, notamment en raison de sa réalisation à base de silicone. Ce produit de démoulage présente également de bonnes performances en terme de tenue au collage ou de tenue à la peinture de la pièce composite réalisée par moulage. En effet, en raison des caractéristiques chimiques dudit produit qui est basé sur des siloxanes époxydés, le faible transfert qui peut avoir lieu au cours du moulage, n'a pas d'influence négative significative sur les propriétés de collage ou de tenue à la peinture de la pièce, contrairement à ce qui peut être observé avec des produits de démoulage à base de solvant.

On notera que, par rapport aux produits de démoulage usuels à base de solvant, le produit conforme à l'invention, obtenu à partir du mélange précité, présente également les avantages suivants :
- suppression du problème de rejets de composés organiques volatils,
- réduction de la quantité de produit consommé,
- réduction du temps d'application du produit,
- amélioration des caractéristiques de collage sur le matériau composite, et
- amélioration de l'aspect de surface.

Le produit de démoulage conforme à l'invention polymérise par voie thermique. Le cycle de polymérisation par voie thermique peut être de 1 heure à 150°C (+/- 5°).

Toutefois, selon les applications envisagées, ce cycle peut être optimisé, par exemple à 30 minutes à 100°C.

Le produit de démoulage de l'invention est liquide et il est appliqué sur la surface du moule, avec une épaisseur très faible (de l'ordre du micron généralement), de préférence de façon manuelle, à l'aide d'un chiffon ou au moyen de lingettes pré imprégnées par ledit produit.

Généralement, il n'est pas nécessaire d'appliquer ce produit sur le moule à chaque moulage. Le nombre d'opération de moulage possible avec un revêtement du produit conforme à la présente invention dépend du type de moulage mis en oeuvre, mais reste généralement équivalent à celui obtenu avec des démoulants usuels à base de solvant.

On notera que le produit de démoulage conforme à l'invention est efficace pour la polymérisation sur moules métalliques ou composites de toute pièce composite, utilisant des résines époxydes de classe inférieure ou égale à 180°C.

## Revendications

1. Moule pour une pièce en matériau composite, **caractérisé en ce qu'**il est enduit d'un produit liquide de démoulage sans solvant, qui polymérise par voie thermique ; le produit comportant :
- 100 parts pondérales d'un constituant de base consistant en un polydiméthylsiloxane époxyde,
- entre 5 et 7 parts pondérales d'un agent de polymérisation dudit constituant de base, constitué d'un sel de diaryliodonium,
- entre 5 et 10 parts pondérales d'un modulateur d'anti-adhérence, constitué d'un polydiméthylsiloxane époxydé; et
- un agent anti-collage rendant le produit moins gluant avant polymérisation, qui est constitué de 8 à 12 parts pondérales de mono-vinyléther de dodécyle et de 8 à 12 parts pondérales d'un cyclohexane diméthanoldivinyléther.

2. Moule selon la revendication 1, **caractérisé en ce que** ladite pièce est une pale d'hélicoptère ou un élément de pale d'hélicoptère en matériau composite.

3. Moule selon l'une des revendications 1 ou 2 **caractérisé en ce qu'**il est constitué en matériau métallique ou composite.

## Patentansprüche

1. Gussform für ein Verbundwerkstoffteil, **dadurch gekennzeichnet, dass** sie mit einem flüssigen Formtrennmittel ohne Lösungsmittel bestrichen ist, welches unter Wärmeeinwirkung polymerisiert, wobei das Mittel aufweist:
- 100 Gewichtsanteile eines Grundbestandteils bestehend aus einem Polydimetylsiloxanepoxid,
- zwischen 5 und 7 Gewichtsanteile eines Polymerisationsmittels des Grundbestandteils, bestehend aus einem Diaryliodoniumsalz,
- zwischen 5 und 10 Gewichtsanteile eines Antihaftmittels bestehend aus einem Polydimetylsiloxanepoxid, und
- ein Antiklebemittel, welches das Formtrennmittel vor seiner Polymerisation weniger klebrig macht, bestehend aus 8 bis 12 Gewichtsanteilen Dodecylmonovenylether und 8 bis 12 Gewichtsanteilen eines Cyclohexandimethanoldivinylethers.

2. Gussform nach Anspruch 1, **dadurch gekennzeichnet, dass** das Teil ein Rotorblatt eines Helikopters oder ein Element eines Rotorblatts eines Helikopters aus Verbundwerkstoff ist.

3. Gussform nach einem der Ansprüche 1 oder 2, **dadurch gekennzeichnet, dass** sie aus Metall oder einem Verbundwerkstoff besteht.

## Claims

1. A mould for a part made of composite material, **characterised in that** it is coated with a liquid, solvent-free, heat-polymerising demoulding product; the product comprising:
- 100 parts by weight of a base constituent consisting of an epoxy polydimethylsiloxane,
- between 5 and 7 parts by weight of a polymerisation agent for said base constituent, formed of a diaryliodonium salt,
- between 5 and 10 parts by weight of an anti-adhesion modulator, formed of an epoxy polydimethylsiloxane; and
- an anti-stick agent which makes the product less sticky before polymerisation, which is formed of 8 to 12 parts by weight of dodecyl monovinyl ether and 8 to 12 parts by weight of a cyclohexanedimethanol divinyl ether.

2. A mould according to Claim 1, **characterised in that** said part is a helicopter blade or an element of a helicopter blade made of composite material.

3. A mould according to one of Claims 1 or 2, **characterised in that** it is formed of metallic or composite material.
